# EUROPÄISCHE PATENTSCHRIFT

(11) **EP 1 540 796 B1**
(45) Veröffentlichungstag und Bekanntmachung des Hinweises auf die Patenterteilung: **20.02.2019**
(21) Anmeldenummer: 03769180.5
(22) Anmeldetag: 08.09.2003
(51) Int. Cl.: H02K 9/19, H02K 9/24, B63G 8/08, B63H 21/17, B63H 21/38

(54) **REDUNDANTES KÜHLSYSTEM MIT ZWEI KÜHLKREISLÄUFEN IN EINEM STATORKÜHLRING FÜR EINEN ELEKTRISCHEN ANTRIEBSMOTOR**
REDUNDANT COOLING SYSTEM WITH TWO COOLING CIRCUITS IN A STATOR COOLING RING FOR AN ELECTRIC POWER UNIT MOTOR
SYSTEME DE REFROIDISSEMENT REDONDANT A DEUX CIRCUITS DE REFROIDISSEMENT DANS LA CHEMISE REFRIGERANTE DU STATOR POUR UN MOTEUR ELECTRIQUE D'ENTRAINEMENT

(30) Priorität: 20.09.2002 DE 10243775
(43) Veröffentlichungstag der Anmeldung: 15.06.2005
(73) Patentinhaber: Siemens Aktiengesellschaft, 80333 München (DE)
(72) Erfinder: TÖLLE, Hans-Jürgen, 90419 Nürnberg (DE); VOGEL, Reinhard, 91074 Herzogenaurach (DE); WENGLER, Peter, 91058 Erlangen (DE)
(86) Internationale Anmeldenummer: PCT/DE2003/002978
(87) Internationale Veröffentlichungsnummer: WO 2004/030182

(56) Entgegenhaltungen:
- WO-A-92/19851
- WO-A-03/043104
- GB-A- 2 162 377
- US-A1- 2003 141 769
- HEINE W ET AL: "FOUR-CIRCUIT DC MOTOR FOR SUBMARINE PROPULSION" SIEMENS POWER ENGINEERING & AUTOMATION, SIEMENS AG. BERLIN, DE, Bd. 7, Nr. 2, März 1985 (1985-03), Seiten 97-101, XP000786034
- PATENT ABSTRACTS OF JAPAN vol. 2000, no. 09, 13. Oktober 2000 (2000-10-13) -& JP 2000 175434 A (NIKON CORP), 23. Juni 2000 (2000-06-23)
- PATENT ABSTRACTS OF JAPAN vol. 1999, no. 05, 31. Mai 1999 (1999-05-31) -& JP 11 041860 A (MITSUBISHI ELECTRIC CORP), 12. Februar 1999 (1999-02-12)

## Beschreibung

Die Erfindung bezieht sich auf eine redundante Kühlvorrichtung für einen elektrischen flüssigkeitsgekühlten U-Boot-Antriebsmotor, mit einem ersten Kühlkreislauf und einem zweiten Kühlkreislauf, mittels denen Wärmeenergie vom elektrischen U-Boot-Antriebsmotor abtransportierbar ist.

Aus "Four-Circuit DC Motor for Submarine Propulsion", W. Heine et. al., Siemens Power Engineering & Automation VII (1985) No. 2, S. 97-101, XP-000786034, Siemens AG (Berlin), ist ein unterteilter Motor mit zwei unabhängigen Kühlkreisläufen bekannt.

Der Erfindung liegt die Aufgabe zugrunde, eine redundante Kühlvorrichtung hoher Leistungsfähigkeit für einen elektrischen U-Boot-Antriebsmotor zur Verfügung zu stellen, wobei mit der abzuführenden Wärmemenge über angepasste Kühlmittelströme ein hohes Maß an Betriebssicherheit und Redundanz zur Verfügung gestellt werden soll.

Diese Aufgabe wird erfindungsgemäß dadurch gelöst, dass der erste Kühlkreislauf und der zweite Kühlkreislauf der redundanten Kühlvorrichtung im Bereich des elektrischen U-Boot-Antriebsmotors so ausgeführt sind, dass das Kühlmittel des ersten und des zweiten Kühlkreislaufs einen Ständerkühlring, in welchem die Kühlkreisläufe angeordnet sind, in zueinander gegenläufigen Richtungen durchströmen. Durch diese Gegenläufigkeit der beiden Kühlkreisläufe im Bereich des U-Boot-Antriebsmotors wird dieser in weitaus gleichmäßigerem Ausmaß entwärmt als das bei aus dem Stand der Technik bekannten Kühlvorrichtungen möglich ist.

Um den an einen elektrischen U-Boot-Antriebsmotor gestellten Betriebsbedingungen hinsichtlich der unterschiedlichen Leistungsabgabe gestellten Anforderungen vorteilhaft zu genügen, ist es zweckmäßig, jedem Kühlkreislauf eine Haupt-und eine Kleinpumpe mit einer im Vergleich zur Hauptpumpe erheblich geringeren Leistung zuzuordnen, wobei die Haupt- und die Kleinpumpe jedes Kühlkreislaufs vorteilhaft voneinander unabhängige Versorgungsspannungen aufweisen.

Entsprechend kann zur Erhöhung des Wirkungsgrads des gesamten Antriebssystems jeder Kühlkreislauf in einem niedrigen Drehzahlbereich des elektrischen U-Boot-Antriebsmotors ausschließlich mittels der ihm zugeordneten Kleinpumpe und in einem oberhalb des niedrigen Drehzahlbereichs des elektrischen U-Boot-Antriebsmotors ausschließlich mittels der ihm zugeordneten Hauptpumpe betreibbar sein.

Wenn zwischen den beiden redundanten Kühlkreisläufen Überleitungen vorgesehen sind, in denen jeweils ein Kuppelventil angeordnet ist, können bei Ausfall eines Kühlkreislaufs, z.B. wegen Ausfall der Pumpen oder Pumpenmotoren, die Kuppelventile durchgeschaltet werden, wobei dann die Kühlmittelumwälzung beider Kühlkreisläufe durch die noch funktionierenden Pumpen realisiert werden kann.

Da in diesem Fall nur eine reduzierte Pumpenleistung mit einem entsprechend reduzierten Kühlmittelstrom zur Verfügung steht, sollte zweckmäßigerweise die Abgabeleistung des elektrischen U-Boot-Antriebsmotors an die dann abführbare Wärmemenge anpassbar sein.

Die zur redundanten Kühlvorrichtung gehörenden redundanten Pumpenaggregate, Wärmetauscher, Armaturen, Ventile usw. sind zweckmäßigerweise auf dem oberen Teil des elektrischen U-Boot-Antriebsmotors angeordnet.

Jeder der beiden Kühlkreisläufe hat gemäß einer vorteilhaften Ausführungsform der erfindungsgemäßen redundanten Kühlvorrichtung weiterhin einen Kühlzweig, mittels dem dem U-Boot-Antriebsmotor zugeordnete Wechselrichtermodule kühlbar sind.

Als Kühlmittel kann in beiden Kühlkreisläufen Frischwasser vorgesehen werden, dem ein Korrosionsschutzmittel und ggf. weitere Zusätze zur biologischen und chemischen Stabilisierung des Wassers zugesetzt sein können, und das je Kühlwasserkreislauf in einem Wasser-Wasser-Wärmetauscher oder in einem Wasser-Luft-Wärmetauscher mittels Seewasser rückkühlbar ist.

Die Steuerung und Schaltung der Haupt- und Kleinpumpe jedes Kühlkreislaufs erfolgt zweckmäßigerweise mittels einer Stromversorgungs- und Schalteinheit, deren eigene Kühlplatten ebenfalls mittels eines weiteren Kühlzweigs jedes Kühlkreislaufs kühlbar sind.

Gemäß einer vorteilhaften Ausführungsform der erfindungsgemäßen redundanten Kühlvorrichtung werden die Motoren der beiden Kleinpumpen mit einer festen Speisefrequenz und/oder Speisespannung betrieben.

Gemäß einer weiteren vorteilhaften Ausführungsform der erfindungsgemäßen redundanten Kühlvorrichtung werden die Hauptpumpen jedes Kühlkreislaufs über Wechselrichter gespeist, um über die veränderbare Drehzahl der Motoren die Fördermenge der Kühlflüssigkeit und damit der abzuführenden Wärmemenge anzupassen. Die Motoren der Hauptpumpen werden so betrieben, dass deren Drehzahl und Leistung an die abzuführende Wärmemenge angepasst werden kann.

Durch die Verwendung von Drehstromasynchronmotoren mit Käfigläufer ergeben sich vorteilhafte Lösungen. Die Drehzahl- und Leistungsanpassung der Asynchronmaschinen mit Kurzschlußläufer kann in vorteilhafter Weise durch Änderung der Speisefrequenz und/oder der Speisespannung und/oder durch Verwendung von polumschaltbaren Maschinen geschehen.

Für jede der Haupt- und Kleinpumpen ist vorteilhaft eine unabhängige Speisespannung vorgesehen.

Jeder Kühlkreislauf ist zweckmäßigerweise mit einem Ausdehnungsgefäß für die Kühlflüssigkeit, einer Einrichtung zur Entgasung der Kühlflüssigkeit, einem Serviceanschluß und vorteilhaft mit einem Überdruckventil ausgerüstet.

Vorteilhaft sind in jedem der beiden Kühlkreisläufe zur Steuerung der Pumpenleistung Temperaturfühler angeordnet.

Zur Sicherung der bedarfsgerechten Versorgung der zu kühlenden Baueinheiten mit Kühlmittel ist vorteilhaft in jedem der beiden Kühlkreisläufe stromauf des Ständerkühlrings, der Wechselrichtermodule und der Stromversorgungs- und Schalteinheit ein druckunabhängiger Mengenregler angeordnet.

Gemäß einer weiteren vorteilhaften Ausführungsform der erfindungsgemäßen redundanten Kühlvorrichtung ist in jedem der beiden Kühlkreisläufe ein temperaturgesteuertes Dreiwegeventil vorhanden.

Darüber hinaus ist es zweckmäßig, wenn in der Druckseite der Kleinpumpen und der Hauptpumpen jeweils ein Rückschlagventil vorgesehen ist.

Außerdem können in vorteilhafter Weiterbildung der erfindungsgemäßen redundanten Kühlvorrichtung in den Verbindungsleitungen zwischen der redundanten Kühlvorrichtung und dem U-Boot-Antriebsmotor beidseitig sperrende Schnellkupplungen angeordnet sein.

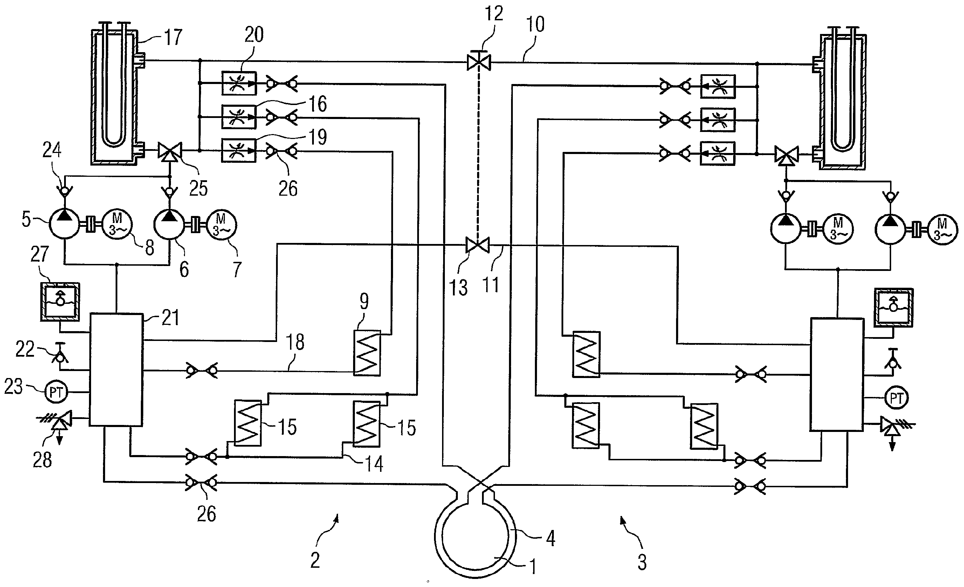

Im folgenden wird die Erfindung anhand einer Ausführungsform unter Bezugnahme auf die Zeichnung näher erläutert, in deren einziger Figur ein Ausführungsbeispiel einer erfindungsgemäßen redundanten Kühlvorrichtung prinzipiell dargestellt ist.

Eine in der einzigen Figur gezeigte Ausführungsform einer erfindungsgemäßen redundanten Kühlvorrichtung dient dazu, einen U-Boot-Antriebsmotor 1 zu kühlen.

Hierzu weist die redundante Kühlvorrichtung zwei voneinander unabhängige Kühlkreisläufe 2, 3 auf, von denen in der einzigen Figur der erste Kühlkreislauf 2 links des U-Boot-Antriebsmotors 1 und der zweite Kühlkreislauf 3 rechts vom U-Boot-Antriebsmotor 1 dargestellt ist.
Der erste Kühlkreislauf 2 durchströmt einen Ständerkühlring 4 des U-Boot-Antriebsmotor 1 im in der Figur gezeigten Ausführungsbeispiel im Uhrzeigersinn, wohingegen der zweite Kühlkreislauf 3 den Ständerkühlring 4 des U-Boot-Antriebsmotors 1 gegen den Uhrzeigersinn durchströmt.
Im übrigen entsprechen sich die beiden Kühlkreisläufe 2 und 3 hinsichtlich ihrer Ausgestaltung, so dass im folgenden lediglich der erste Kühlkreislauf 2 hinsichtlich seiner einzelnen Bestandteile etc. näher erläutert werden wird. Der zweite Kühlkreislauf 3 ist in entsprechender Weise aufgebaut, wobei auch seine Funktionen entsprechend ausgestaltet sind.
Der erste Kühlkreislauf 2 hat eine Hauptpumpe 5 und eine Kleinpumpe 6, deren Leistung im Vergleich zu der der Hauptpumpe 5 wesentlich geringer ist.
Mittels der Kleinpumpe 6 ist die Kühlmittelumwälzung in einem Teillastbereich des U-Boot-Antriebsmotors 1 realisierbar. Die Hauptpumpe 5 des ersten Kühlkreislaufs 2 bleibt dabei ausgeschaltet.
Die Hauptpumpe 5 des ersten Kühlkreislaufs 2 ist im dargestellten Ausführungsbeispiel oberhalb des Teillastbereichs des U-Boot-Antriebsmotors 1 in Betrieb. Die Kleinpumpe 6 kann dabei abgeschaltet werden. Die Motoren 7 und 8 der Klein- und Hauptpumpen 6 bzw. 5 sind im dargestellten Ausführungsbeispiel als Asynchronmotoren mit Kurzschlussläufer ausgeführt. Den beiden Motoren 7, 8 der Klein- 6 bzw. Hauptpumpe 5 des ersten Kühlkreislaufs 2 ist eine Stromversorgungs- und Schalteinheit 9 zugeordnet, deren elektrischer Teil in der einzigen FIGUR nicht dargestellt ist und mittels der die Speisefrequenz und/oder die Speisespannung bedarfsabhängig variiert werden kann.

Für die Motoren 8 der Hauptpumpen 5 und die Motoren 7 der Kleinpumpen 6 der beiden Kühlkreisläufe 2, 3 ist jeweils eine unabhängige Speisespannung vorgesehen.

Zwischen den beiden redundanten Kühlkreisläufen 2, 3 sind zwei sie miteinander verbindende Überleitungen 10, 11 vorgesehen. In diesen beiden Überleitungen 10, 11 ist jeweils ein Kuppelventil 12 bzw. 13 angeordnet, deren Umschaltung über einen gemeinsamen Handhebel erfolgen kann. Bei geöffneten Kuppelventilen 12, 13 ist es möglich, die beiden Kühlkreisläufe 2, 3 mittels einer einzigen Hauptpumpe, z.B. mittels der Hauptpumpe 5, zu betreiben, d.h. der Kühlmittelkreislauf in beiden Kühlkreisläufen 2, 3 ist mittels einer einzigen Hauptpumpe 5 aufrecht erhaltbar. In diesem Betriebszustand kann nur eine geringere Gesamtkühlmittelmenge am U-Boot-Antriebsmotor 1 umgewälzt werden, so dass die Leistung des U-Boot-Antriebsmotors 1 entsprechend der dann noch abführbaren Wärmemenge zu reduzieren ist.

Die Rückkühlung des Kühlmittels erfolgt in beiden Kühlkreisläufen 2, 3 mittels jeweils eines Wasser-Wasser-Wärmetauschers 17, in dem das Kühlmittel der Kühlkreisläufe 2, 3 mittels Seewasser rückgekühlt wird.

Die beiden Wasser-Wasser-Wärmetauscher 17 sowie die beiden Haupt- 5 und die beiden Kleinpumpen 6, Ausdehnungsgefäße 21, druckunabhängige Mengenregler 16, 19, 20 und alle erforderlichen Armaturen der beiden Kühlkreisläufe 2, 3 sind auf dem U-Boot-Antriebsmotor 1 aufgebaut.

Die Kühlkreisläufe 2, 3 weisen je einen Kühlzweig 14 auf, mittels dem in ihm angeordnete Wechselrichtermodule 15 kühlbar sind. Stromauf der Wechselrichtermodule 15 ist in diesem Kühlzweig 14 der druckunabhängige Mengenregler 16 angeordnet.

Die Stromversorgungs- und Schalteinheit 9 jedes Kühlkreislaufs 2, 3 ist in einem weiteren Kühlzweig 18 des ersten 2 bzw. zweiten Kühlkreislaufs 3 angeordnet, wobei stromauf der Stromversorgungs- und Schalteinheit 9 in diesem weiteren Kühlzweig 18 der weitere druckunabhängige Mengenregler 19 angeordnet ist.

Darüber hinaus ist in jedem der beiden Kühlkreisläufe 2, 3 stromauf des Ständerkühlrings 4 des U-Boot-Antriebsmotors 1 der weitere druckunabhängige Mengenregler 20 vorgesehen.

In jedem der beiden Kühlkreisläufe 2, 3 ist das Ausdehnungsgefäß 21 vorhanden, in welchem sich die Kühlflüssigkeit ausdehnen und über eine Entgasungseinrichtung 27 entgasen kann.

An diesem Ausdehnungsgefäß 21 befindet sich auch ein Serviceanschluß 22, z.B. zur Befüllung der Kühlkreisläufe 2, 3.

Zum Schutz der Kühlkreisläufe 2, 3 ist in jedem der Kühlkreisläufe 2, 3 ein Überdruckventil 28 vorhanden.

Darüber hinaus ist in das Ausdehnungsgefäß 21 ein Temperatursensor 23 zur temperaturabhängigen Steuerung der Klein- 6 und Hauptpumpen 5 eingebaut.

Da beim Betrieb von jeweils nur einer Hauptpumpe 5 oder Kleinpumpe 6 in den Kühlkreisläufen 2, 3 die Rückspeisung der Kühlmittelströme über die nicht in Betrieb befindliche Haupt-5 bzw. Kleinpumpe 6 verhindert werden muß, sind jeweils in die Druckleitungen nach der Haupt- 5 und Kleinpumpe 6 entsprechende Rückschlagventile 24 eingebaut.

Um eine Betauung im Inneren des U-Boot-Antriebsmotors 1 während seines Betriebes zu verhindern, wird die Rückkühlung der Kühlflüssigkeit über den Wasser-Wasser-Wärmetauscher 17 mittels Seewasser über ein temperaturgesteuertes Dreiwegeventil 25 gesteuert.

Um die Wartbarkeit und die Zugänglichkeit an dem U-Boot-Antriebsmotor 1 zu erleichtern, sind alle Verbindungen zwischen den Komponenten der redundanten Kühlvorrichtung auf dem Oberteil des U-Boot-Antriebsmotors 1 und dem U-Boot-Antriebsmotor 1 mit beidseitig selbstsperrenden Schnellkupplungen 26 versehen.

## Patentansprüche

1. Redundante Kühlvorrichtung für einen elektrischen U-Boot-Antriebsmotor (1), mit einem ersten Kühlkreislauf (2) und einem zweiten Kühlkreislauf (3), mittels denen Wärmeenergie vom elektrischen U-Boot-Antriebsmotor (1) abtransportierbar ist, **dadurch gekennzeichnet, dass** die Kühlmittel des ersten (2) und des zweiten Kühlkreislaufs (3) im Bereich des elektrischenU-Boot-AntriebsmotorseinenStänderkühlring (4), in welchem die Kühlkreisläufe (2, 3) angeordnet sind, des elektrischenU-Boot-Antriebsmotors (1) zueinander gegenläufig durchströmen.

2. Redundante Kühlvorrichtung nach Anspruch 1, bei der in jedem Kühlkreislauf (2, 3) eine Haupt- (5) und eine Kleinpumpe (6) mit einer im Vergleich zur Hauptpumpe (5) erheblich geringeren Leistung angeordnet sind.

3. Redundante Kühlvorrichtung nach Anspruch 2, bei der die Haupt-(5) und die Kleinpumpe (6) jedes Kühlkreislaufs (2, 3) voneinander unabhängige Versorgungsspannungen aufweisen.

4. Redundante Kühlvorrichtung nach Anspruch 2 oder 3, bei der jeder Kühlkreislauf (2, 3) in einem niedrigen Drehzahlbereich des elektrischenU-Boot-Antriebsmotors (1) ausschließlichmittels der ihm zugeordneten Kleinpumpe (6) betreibbar ist.

5. Redundante Kühlvorrichtung nach Anspruch 4, bei der jeder Kühlkreislauf (2, 3) oberhalb des niedrigen Drehzahlbereichs des elektrischen U-Boot-Antriebsmotors (1) mittels der ihm zugeordneten Hauptpumpe (5) betreibbar ist.

6. Redundante Kühlvorrichtung nach einem der Ansprüche 1 bis 5, zwischen deren beiden redundanten Kühlkreisläufen (2, 3) Überleitungen (10, 11) vorgesehen sind, in denen jeweils ein Kuppelventil (12, 13) angeordnet ist.

7. Redundante Kühlvorrichtung nach Anspruch 6, bei der die Kühlmittelumwälzung der beiden bei geöffneten Kuppelventilen (12, 13) miteinander verbundenen Kühlkreisläufe (2, 3) mittels einer der beiden Hauptpumpen (5) realisierbar ist, wobei die Abgabeleistung des elektrischen U-Boot-Antriebsmotors (1) an die dann abführbare Wärmemenge anpassbar ist.

8. Redundante Kühlvorrichtung nach einem der Ansprüche 1 bis 7, deren redundante Pumpenaggregate, Wärmetauscher, Armaturen, Ventile usw. auf dem oberen Teil des elektrischen U-Boot-Antriebsmotors (1) angeordnet sind.

9. Redundante Kühlvorrichtung nach einem der Ansprüche 1 bis 8, deren beide Kühlkreisläufe (2, 3) jeweils einen Kühlzweig (14) aufweisen, mittels dem dem U-Boot-Antriebsmotor (1) zugeordnete Wechselrichtermodule (15) kühlbar sind.

10. Redundante Kühlvorrichtung nach einem der Ansprüche 1 bis 9, bei der das Kühlmittel in den beiden Kühlkreisläufen (2, 3) in je einem Wasser-Wasser-Wärmetauscher (17) oder Wasser-Luft-Wärmetauscher mittels Seewasser rückkühlbar ist.

11. Redundante Kühlvorrichtung nach einem der Ansprüche 2 bis 10, bei der der Haupt- (5) und der Kleinpumpe (6) jedes Kühlkreislaufs (2, 3) eine Stromversorgungs- und Schalteinheit (9) zugeordnet ist, deren eigene Kühlplattenmittels eines weiteren Kühlzweigs (18) jedes Kühlkreislaufs (2, 3) kühlbar sind.

12. Redundante Kühlvorrichtung nach einem der Ansprüche 2 bis 11, bei der die Motoren (7) jeder Kleinpumpe (6) jedes Kühlkreislaufs (2, 3) mit einer festen Speisespannung und/oder Speisefrequenz betrieben werden.

13. Redundante Kühlvorrichtung nach einem der Ansprüche 2 bis 12, bei der jeder Hauptpumpe (5) jedes Kühlkreislaufs (2, 3) über Wechselrichter gespeist werden, um über die veränderbare Drehzahl der Motoren (8) die Fördermenge der Kühlflüssigkeit und damit der abzuführenden Wärmemenge anzupassen.

14. Redundante Kühlvorrichtung nach einem der Ansprüche 2 bis 13, bei der die Motoren (8) der beiden Hauptpumpen (5) als Drehstromasynchronmotoren mit Käferläufer ausgebildet sind.

15. Redundante Kühlvorrichtung nach einem der Ansprüche 2 bis 14, bei der für jede Haupt- (5) und Kleinpumpe (6) eine unabhängige Speisespannung vorgesehen ist.

16. Redundante Kühlvorrichtung nach einem der Ansprüche 1 bis 15, bei der jeder Kühlkreislauf (2, 3) ein Ausdehnungsgefäß (21) für die Kühlflüssigkeit aufweist.

17. Redundante Kühlvorrichtung nach einem der Ansprüche 1 bis 16, bei der jeder Kühlkreislauf (2, 3) eine Entgasungseinrichtung (27) und einen Serviceanschluss (22) für die Kühlflüssigkeit aufweist.

18. Redundante Kühlvorrichtung nach einem der Ansprüche 1 bis 17, bei der jeder Kühlkreislauf (2, 3) einÜberdruckventilaufweist.

19. Redundante Kühlvorrichtung nach einem der Ansprüche 1 bis 18, bei der in jedem der beiden Kühlkreisläufe (2, 3) ein Temperatursensor (23) angeordnet ist.

20. Redundante Kühlvorrichtung nach einem der Ansprüche 11 bis 19, bei der in jedem der beiden Kühlkreisläufe (2, 3) stromauf des Ständerkühlrings (4), stromauf der Wechselrichtermodule (15) und stromauf der Stromversorgungs- und Schalteinheit (9) jeweils ein druckunabhängiger Mengenregler (20, 16, 19) angeordnet ist.

21. Redundante Kühlvorrichtung nach einem der Ansprüche 1 bis 20, bei der in jedem der beiden Kühlkreisläufe (2, 3) ein temperaturgesteuertes Dreiwegeventil (25) vorhanden ist.

22. Redundante Kühlvorrichtung nach einem der Ansprüche 2 bis 21, bei der in der Druckseite der Kleinpumpen (6) und der Hauptpumpen (5) jeweils ein Rückschlagventil (24) vorhanden ist.

23. Redundante Kühlvorrichtung nach einem der Ansprüche 1 bis 22, bei der in den Verbindungselementen zwischen der redundanten Kühlvorrichtung und dem U-Boot-Antriebsmotor (1) beidseitig sperrende Schnellkupplungen (26) angeordnet sind.

## Claims

1. Redundant cooling device for an electric submarine drive motor (1), with a first cooling circuit (2) and a second cooling circuit (3), by means of which thermal energy can be transported away from the electric submarine drive motor (1), **characterized in that** the coolant of the first cooling circuit (2) and the coolant of the second cooling circuit (3) flow in counter-current through a stator cooling ring (4), in which the cooling circuits (2, 3) are arranged, of the electric submarine drive motor (1) in the region of the electric submarine drive motor.

2. Redundant cooling device according to Claim 1, in which a main pump (5) and a minor pump (6) with considerably lower power in comparison with the main pump (5) are arranged in each cooling circuit (2, 3).

3. Redundant cooling device according to Claim 2, in which the main pump (5) and the minor pump (6) of each cooling circuit (2, 3) have supply voltages that are independent from each other.

4. Redundant cooling device according to Claim 2 or 3, in which each cooling circuit (2, 3) can be operated in a low speed range of the electric submarine drive motor (1) exclusively by means of the minor pump (6) assigned to it.

5. Redundant cooling device according to Claim 4, in which each cooling circuit (2, 3) can be operated above the low speed range of the electric submarine drive motor (1) by means of the main pump (5) assigned to it.

6. Redundant cooling device according to one of Claims 1 to 5, between the two redundant cooling circuits (2, 3) of which transfer lines (10, 11) in which a coupling valve (12, 13) is respectively arranged are provided.

7. Redundant cooling device according to Claim 6, in which the coolant circulation of the two cooling circuits (2, 3) connected to each other when the coupling valves (12, 13) are open can be accomplished by means of one of the two main pumps (5), the output power of the electric submarine drive motor (1) being adaptable to the amount of heat which can then be removed.

8. Redundant cooling device according to one of Claims 1 to 7, the redundant pump units, heat exchangers, fittings, valves, etc. of which are arranged on the upper part of the electric submarine drive motor (1).

9. Redundant cooling device according to one of Claims 1 to 8, the two cooling circuits (2, 3) of which each have a cooling branch (14), by means of which inverter modules (15) assigned to the submarine drive motor (1) can be cooled.

10. Redundant cooling device according to one of Claims 1 to 9, in which the coolant in the two cooling circuits (2, 3) can be re-cooled by means of sea water in a water-water heat exchanger (17) or water-air heat exchanger in each case.

11. Redundant cooling device according to one of Claims 2 to 10, in which the main pump (5) and the minor pump (6) of each cooling circuit (2, 3) is assigned a power supplying and a switching unit (9), the dedicated cooling plates of which can be cooled by means of a further cooling branch (18) of each cooling circuit (2, 3).

12. Redundant cooling device according to one of Claims 2 to 11, in which the motors (7) of each minor pump (6) of each cooling circuit (2, 3) are operated with a fixed supply voltage and/or supply frequency.

13. Redundant cooling device according to one of Claims 2 to 12, in which each main pump (5) of each cooling circuit (2, 3) are supplied via inverters, in order to adapt the delivery rate of the cooling liquid, and with it the amount of heat to be removed, via the variable speed of the motors (8).

14. Redundant cooling device according to one of Claims 2 to 13, in which the motors (8) of the two main pumps (5) are formed as squirrel-cage three-phase asynchronous motors.

15. Redundant cooling device according to one of Claims 2 to 14, in which an independent supply voltage is provided for each main pump (5) and minor pump (6).

16. Redundant cooling device according to one of Claims 1 to 15, in which each cooling circuit (2, 3) has an expansion vessel (21) for the cooling liquid.

17. Redundant cooling device according to one of Claims 1 to 16, in which each cooling circuit (2, 3) has a degassing device (27) and a service connection (22) for the cooling liquid.

18. Redundant cooling device according to one of Claims 1 to 17, in which each cooling circuit (2, 3) has a pressure-relief valve.

19. Redundant cooling device according to one of Claims 1 to 18, in which a temperature sensor (23) is arranged in each of the two cooling circuits (2, 3).

20. Redundant cooling device according to one of Claims 11 to 19, in which a pressure-independent flow governor (20, 16, 19) is respectively arranged in each of the two cooling circuits (2, 3) upstream of the stator cooling ring (4), upstream of the inverter modules (15) and upstream of the power supplying and switching unit (9).

21. Redundant cooling device according to one of Claims 1 to 20, in which a temperature-controlled three-way valve (25) is present in each of the two cooling circuits (2, 3).

22. Redundant cooling device according to one of Claims 2 to 21, in which a nonreturn valve is respectively present in a pressure side of the minor pumps (6) and the main pumps (5).

23. Redundant cooling device according to one of Claims 1 to 22, in which quick-action couplings (26) that shut off in both directions are arranged in the connecting elements between the redundant cooling device and the submarine drive motor (1).

## Revendications

1. Système de refroidissement redondant pour un moteur (1) électrique d'entraînement d'un sous-marin, comprenant un premier circuit (2) de refroidissement et un deuxième circuit (3) de refroidissement, au moyen desquels de l'énergie calorifique peut être évacuée du moteur (1) électrique d'entraînement de sous-marin, **caractérisé en ce que** les fluides de refroidissement du premier (2) et du deuxième circuits (3) de refroidissement passent en sens contraire l'un de l'autre dans la région du moteur électrique d'entraînement du sous-marin dans un anneau (4) de refroidissement de stator, dans lequel sont disposés les circuits (2, 3) de refroidissement, du moteur (1 ) électrique d'entraînement du sous-marin.

2. Dispositif de refroidissement redondant suivant la revendication 1, dans lequel, dans chaque circuit (2, 3) de refroidissement, sont montées une pompe (5) principale et une petite pompe (6), ayant une puissance considérablement plus petite que la pompe (5) principale.

3. Dispositif de refroidissement redondant suivant la revendication 2, dans lequel la pompe (5) principale et la petite pompe (6) de chaque circuit (2, 3) de refroidissement ont des tensions d'alimentation indépendantes l'une de l'autre.

4. Dispositif de refroidissement redondant suivant la revendication 2 ou 3, dans lequel chaque circuit (2, 3) de refroidissement peut fonctionner dans une plage de vitesse de rotation petite du moteur (1) électrique d'entraînement du sous-marin, exclusivement au moyen de la petite pompe (6), qui lui est associée.

5. Dispositif de refroidissement redondant suivant la revendication 4, dans lequel chaque circuit (2, 3) de refroidissement peut, au-dessus de la petite plage de vitesse de rotation du moteur (1) électrique d'entraînement du sous-marin, fonctionner au moyen de la pompe (5) principale, qui lui est associée.

6. Dispositif de refroidissement redondant suivant l'une des revendications 1 à 5, entre ses deux circuits (2, 3) de refroidissement redondants sont prévus des passages (10, 11) dans chacun desquels est montée une vanne (12, 13) de connexion.

7. Dispositif de refroidissement redondant suivant la revendication 6, dans lequel la recirculation du fluide de refroidissement des deux circuits (2, 3) de refroidissement, communiquant entre eux alors que les vannes (12, 13) de connexion sont ouvertes, peut être réalisée au moyen de l'une des deux pompes (5) principales, la puissance fournie du moteur (1) électrique d'entraînement du sous-marin pouvant être adaptée à la quantité de chaleur, qui peut alors être évacuée.

8. Dispositif de refroidissement redondant suivant l'une des revendications 1 à 7, dont des groupes de pompage, des échangeurs de chaleur des robinets, des vannes, etc... redondants sont montés sur la partie supérieure du moteur (1) électrique d'entraînement du sous-marin.

9. Dispositif de refroidissement redondant suivant l'une des revendications 1 à 8, dont les deux circuits (2, 3) de refroidissement ont chacun une branche (14) de refroidissement au moyen de laquelle des modules (15) d'onduleur, associés au moteur (1) d'entraînement du sous-marin peuvent être refroidis.

10. Dispositif de refroidissement redondant suivant l'une des revendications 1 à 9, dans lequel le fluide de refroidissement, dans les deux circuits (2, 3) de refroidissement, peut être retourné dans, respectivement, un échangeur de chaleur (17) eau-eau ou un échangeur de chaleur eau-air, au moyen d'eau de mer.

11. Dispositif de refroidissement redondant suivant l'une des revendications 2 à 10, dans lequel, à la pompe (5) principale et à la petite pompe (6) de chaque circuit (2, 3) de refroidissement est associée une unité (9) d'alimentation en courant et de commutation, dont les propres plaques de refroidissement peuvent être refroidies au moyen d'une autre branche (18) de refroidissement de chaque circuit (2, 3) de refroidissement.

12. Dispositif de refroidissement redondant suivant l'une des revendications 2 à 11, dans lequel les moteurs (7) de chaque petite pompe (6) de chaque circuit (2, 3) de refroidissement fonctionne à une tension d'alimentation et/ou une fréquence d'alimentation fixe.

13. Dispositif de refroidissement redondant suivant l'une des revendications 2 à 12, dans lequel chaque pompe (5) principale de chaque circuit (2, 3) de refroidissement est alimentée par un onduleur pour adapter, par la vitesse de rotation variable des moteurs (8), la quantité de liquide de refroidissement véhiculé et ainsi la quantité de chaleur s'évacuant.

14. Dispositif de refroidissement redondant suivant l'une des revendications 2 à 13, dans lequel les moteurs (8) des deux pompes (5) principales sont constitués sous la forme de moteurs asynchrones polyphasés à rotor à cage d'écureuil.

15. Dispositif de refroidissement redondant suivant l'une des revendications 2 à 14, dans lequel il est prévu, pour chaque pompe (5) principale et petite pompe (6), une tension d'alimentation indépendante.

16. Dispositif de refroidissement redondant suivant l'une des revendications 1 à 15, dans lequel chaque circuit (2, 3) de refroidissement a une cuve (21) d'expansion pour le liquide de refroidissement.

17. Dispositif de refroidissement redondant suivant l'une des revendications 1 à 16, dans lequel chaque circuit (2, 3) de refroidissement a un dispositif (27) de dégazage et un raccord (22) de service pour le liquide de refroidissement.

18. Dispositif de refroidissement redondant suivant l'une des revendications 1 à 17, dans lequel chaque circuit (2, 3) de refroidissement a une soupape de surpression.

19. Dispositif de refroidissement redondant suivant l'une des revendications 1 à 18, dans lequel une sonde (23) de température est montée dans chacun des deux circuits (2, 3) de refroidissement.

20. Dispositif de refroidissement redondant suivant l'une des revendications 11 à 19, dans lequel, respectivement, un régleur (20, 16, 19) de quantité en fonction de la pression est monté dans chacun des deux circuits (2, 3) de refroidissement, en amont de l'anneau (4) de refroidissement du stator, en amont du module (15) d'onduleur et en amont de l'unité (9) d'alimentation en courant et de commutation.

21. Dispositif de refroidissement redondant suivant l'une des revendications 1 à 20, dans lequel il y a une soupape (25) à trois voies commandée en température dans chacun des deux circuits (2, 3) de refroidissement.

22. Dispositif de refroidissement redondant suivant l'une des revendications 2 à 21, dans lequel il y a, respectivement, un clapet (24) antiretour du côté de refoulement des petites pompes (6) et des pompes (5) principales.

23. Dispositif de refroidissement redondant suivant l'une des revendications 1 à 22, dans lequel, dans les éléments de liaison, entre le système de refroidissement redondant et le moteur (1) d'entraînement du sous-marin, sont montés des raccordements (26) rapides bloquant des deux côtés.
